# EUROPÄISCHE PATENTSCHRIFT

(11) **EP 4 297 182 B1**
(45) Veröffentlichungstag und Bekanntmachung des Hinweises auf die Patenterteilung: **07.01.2026**
(21) Anmeldenummer: 22179987.7
(22) Anmeldetag: 20.06.2022
(51) Int. Cl.: H01Q 1/22, H01Q 1/00, H01P 1/04, H01P 3/16, H01P 5/02, H01P 3/12

(54) **WELLENLEITER MIT ZWEI WELLENLEITERTEILSTÜCKEN UND ANTENNE**
WAVEGUIDE WITH TWO WAVEGUIDE SECTIONS AND ANTENNA
GUIDE D'ONDES POURVU DE DEUX PIÈCES PARTIELLES DE GUIDE D'ONDES ET ANTENNE

(43) Veröffentlichungstag der Anmeldung: 27.12.2023
(73) Patentinhaber: VEGA Grieshaber KG, 77709 Wolfach (DE)
(72) Erfinder: WÄLDE, Steffen, 78078 Niedereschach (DE); WEINZIERLE, Christian, 77709 Wolfach (DE)
(74) Vertreter: Maiwald GmbH

(56) Entgegenhaltungen:
- EP-A1- 3 611 793
- WO-A1-2020/015935
- CN-A- 112 490 602
- DE-A1- 102014 118 867
- US-A- 5 851 083
- US-A1- 2020 235 452
- US-A1- 2021 408 652
- ANONYMOUS .: "ADAPTER (waveguide to coax)", 1 November 2006 (2006-11-01), pages 1 - 1, XP055975244, Retrieved from the Internet <URL:http://mpl.jp/waveguide/CMT-Waveguide.pdf> [retrieved on 20221026]

## Beschreibung

### Gebiet der Erfindung

Die Erfindung betrifft einen Wellenleiter eingerichtet zum Propagieren von Hochfrequenzwellen und eine Antenne, ein Verfahren zur Herstellung eines Wellenleiters und einer Antenne, eine Wellenleiteranordnung und eine Verwendung.

### Hintergrund

Zur Füllstandmessung oder zur Grenzstandbestimmung, beispielsweise in einem Behälter, werden verschiedene Arten von Messgeräten eingesetzt. Dabei werden Geräte, die Hochfrequenzwellen (HF-Wellen), insbesondere Radarwellen, zur Messung verwenden, für eine Vielzahl von Anwendungen der Automatisierungstechnik, Prozessüberwachung und/oder weiterer Einsatzfelder eingesetzt. Insbesondere bei Einsatzfeldern, bei denen Prozesse bei sehr hohen Temperaturen überwacht werden, müssen Vorkehrungen getroffen werden, damit diese Geräte auch bei derartig hohen Temperaturen eingesetzt werden können.

Das Dokument US 5,851,083 A betrifft einen Adapter mit einer thermischen Barriere für einen Mikrowellenfüllstandmesser.

Das Dokument WO 2020 015 935 A1 betrifft einen Hochfrequenzbaustein zur Erzeugung bzw. Verarbeitung von Radar-Signalen, insbesondere zum Einsatz bei Radar-basierten Füllstandsmessgeräten.

Das Dokument CN 112 490 602 A betrifft ein Wellenleitergerät im THz-Bereich mit einer Multilayer-Struktur.

Das Dokument US 2021 408 652 A1 betrifft Komponenten für eine Kommunikation mittels Millimeterwellen.

Das Dokument US 2020 235 452 A1 betrifft eine Wellenleiteranordnung zur Übertragung von Mikrowellen.

Das Dokument DE 10 2014 118 867 A1 betrifft ein nach dem Radarprinzip arbeitendes Füllstandmessgerät mit einer elektrischen Sende- und Auswerteeinheit, mit einer sich an die Sende- und Auswerteeinheit anschließenden Übertragungsstrecke für elektromagnetische Wellen und mit einer sich an die Übertragungsstrecke anschließenden Antenne zur Abstrahlung der elektromagnetischen Wellen.

Das Dokument EP 3 611 793 A1 betrifft dielektrische Wellenleiter zur Übertragung von Hochfrequenzsignalen.

### Zusammenfassung

Es ist Aufgabe der Erfindung, ein Merkmal zur Verfügung zu stellen, welches den Einsatz von Messgeräten, die HF-Wellen verwenden, auch bei hohen Temperaturen erlaubt.

Diese Aufgabe wird durch den Gegenstand der unabhängigen Patentansprüche gelöst. Weiterbildungen der Erfindung ergeben sich aus den Unteransprüchen und der folgenden Beschreibung.

Ein Aspekt betrifft einen Wellenleiter und eine Antenne zum Propagieren von Hochfrequenzwellen entsprechend Anspruch 1, der Wellenleiter aufweisend:
ein erstes Wellenleiterteilstück, welches ein erstes Material aufweist, und
ein zweites Wellenleiterteilstück, welches ein zweites Material aufweist, wobei das zweite Material eine höhere Temperaturstabilität als das erste Wellenleiterteilstück aufweist.

Wellenleiter sind geeignet und/oder dazu eingerichtet, HF-Wellen zu übertragen, z.B. von einem HF-Generator zu einer Antenne. Eine Ausführungsform eines Wellenleiters ist ein dielektrischer Wellenleiter. Der dielektrische Wellenleiter kann beispielsweise als ein Kunststofffilament ausgeführt sein, mit einer Querschnittsfläche von prinzipiell beliebiger Form, die in zumindest einigen Ausführungsformen rechteckig oder rund ausgeführt sein kann. Der dielektrische Wellenleiter kann dafür geeignet oder dazu eingerichtet sein, ein Hochfrequenzsignal zu übertragen, insbesondere verlustarm zu übertragen. Ein dielektrischer Wellenleiter kann beispielsweise eine Querschnittsfläche zwischen 0,25 mm² und 8 mm² aufweisen. Die Querschnittsfläche kann von der zu übertragenden Frequenz des Messsignals abhängig sein, von der relativen Permittivität (DK-Wert) des verwendeten Materials und/oder von der Geometrie der Querschnittsfläche des Wellenleiters. In zumindest einigen Fällen können Materialien, die eine geringe Dämpfung aufweisen, für eine Anwendung bei hohen Temperaturen ungeeignet sein. Als hohe Temperaturen werden dabei Temperaturen von über 200 °C, insbesondere von über 300 °C, beispielsweise von über 400 °C, angesehen.

Als Beispiel für ein Material mit geringer Dämpfung und beschränkter Temperaturfestigkeit kann z.B. Hart-Polyethylen (High Density Polyethylen, HDPE) angesehen werden. So liegt das tan(δ) von HDPE im Bereich zwischen 220 GHz und 330 GHz beispielsweise bei 0,0016, d.h. HDPE weist vorteilhafterweise eine geringe Dämpfung auf. Allerdings hat HDPE einen relativ niedrigen Schmelzpunkt, etwa um 130 °C. Ähnliches kann auch für weitere Materialien gelten.

Weiterhin kann eine Sensorelektronik des Messgeräts empfindlich gegenüber hohen Temperaturen sein. Beispielsweise sind viele Halbleiter, die als HF-Generator, als Sender, als Empfänger und/oder für weitere Funktionen des Messgeräts verwendet werden, nur bis maximal etwa 85 °C spezifiziert.

Eine der Maßnahmen oder Merkmale, welche bei den genannten Rahmenbedingungen einen Einsatz der Messgeräte auch bei hohen Temperaturen ermöglichen, ist, die Strecke zwischen HF-Generator und Antenne möglichst lang zu gestalten. Allerdings darf für sinnvoll einsatzbare Messgeräte die Signaldämpfung, die das HF-Signal während der Transmission erfährt, nicht zu hoch sein. Daher ist es vorteilhaft, einen Wellenleiter mit zwei Wellenleiterteilstücken zu verwenden, wobei ein erstes Wellenleiterteilstück ein erstes Material aufweist und ein zweites Wellenleiterteilstück ein zweites Material aufweist, wobei das zweite Material eine höhere Temperaturstabilität als das erste Wellenleiterteilstück aufweist. Das dem Prozess zugewandte Material weist also eine relativ höhere Temperaturstabilität auf, und das der Elektronikeinheit zugewandte Material weist relativ geringere Signaldämpfungseigenschaften auf. Darüber hinaus kann das erste Material kostengünstiger sein. In einigen Ausführungsformen kann das zweite Wellenleiterteilstück für Temperaturen bis 450 °C geeignet und/oder eingerichtet sein. Die Länge des zweiten Wellenleiterteilstücks kann z.B. durch dessen Temperaturkoeffizienten bestimmt sein. Beispielsweise kann das zweite Teilstück eine Länge aufweisen, die es ermöglicht, dass - bei einer maximal zulässigen oder spezifizierten Temperatur zur Prozessseite hin - das andere Ende des zweiten Teilstücks eine geringere (insbesondere eine deutlich geringere) Temperatur aufweist als die Schmelztemperatur des ersten Materials. Ein derartiger Wellenleiter mit zwei Wellenleiterteilstücken vereint daher vorteilhafterweise eine geringe Dämpfung des HF-Signals mit einer hohen Temperaturfestigkeit.

In den Ausführungsformen ist das erste Wellenleiterteilstück und das zweite Wellenleiterteilstück als dielektrischer Wellenleiter ausgeführt. Dies kann vorteilhafterweise z.B. für eine galvanische Trennung zwischen Sensorelektronik und Antenne verwendet werden. Ein dielektrischer Wellenleiter benötigt zur Signalübertragung nämlich keinerlei metallische Verbindung, wodurch sich eine hervorragende Potentialtrennung ergeben kann.

In einigen nicht beanspruchten Ausführungsformen ist das erste Wellenleiterteilstück als dielektrischer Wellenleiter und das zweite Wellenleiterteilstück als Hohlleiter ausgeführt. Da ein - in der Regel metallischer - Hohlleiter für sehr hohe Temperaturen geeignet sein kann, können diese Ausführungsformen besonders für Messgeräte geeignet sein, die für sehr hohe Temperaturen spezifiziert sind. In einer Ausführungsform können die Wellenleiterteilstücke z.B. als Abfolge "Hohlleiter - dielektrischer Wellenleiter - Hohlleiter" realisiert sein.

In einigen Ausführungsformen weist das erste Wellenleiterteilstück eine geringere Dämpfung auf als das zweite Wellenleiterteilstück. Dies kann für solche Ausführungsformen besonders vorteilhaft sein, die einen besonders großen Abstand zwischen HF-Generator und Antenne benötigen.

In einigen Ausführungsformen besteht das erste Wellenleiterteilstück aus einem Kunststoff oder weist dieses Material auf, insbesondere ein Material aus einer Gruppe, welche Polytetrafluorethylen, PTFE, Perfluoralkoxy, PFA, Polyvinylidenfluorid, PVDF, Polypropylen, PP, Polyoxymethylen, POM, Polyethylenterephthalat, PET, Polybutylenterephthalat, PBT, Hart-Polyethylen, HDPE, umfasst.

In einigen Ausführungsformen besteht das zweite Wellenleiterteilstück, wenn es als dielektrischer Wellenleiter ausgeführt ist, aus einer Keramik, insbesondere Aluminiumoxid oder Zirconiumdioxid, oder aus einem Kunststoff oder weist dieses Material auf, insbesondere ein Material aus einer Gruppe, welche Polyetheretherketon, PEEK, Polyetherketone, PEK, Polytetrafluorethylen, PTFE, Perfluoralkoxy, PFA, und/oder Polyvinylidenfluorid, PVDF, umfasst.

Bei der Wahl der Materialien für das erste und/oder das zweite Wellenleiterteilstück können eine Reihe von Überlegungen relevant sein. Die für Wellenleiter verwendbaren Kunststoffe weisen unterschiedliche Dämpfungseigenschaften auf. Geringe Dämpfungseigenschaften haben beispielsweise PTFE (Polytetrafluorethylen), PFA (Perfluoralkoxy) und HDPE (Hart-Polyethylen). Beispielsweise liegt das tan(δ) von HDPE im Bereich zwischen 220 GHz und 330 GHz bei 0,0016. Der Wert von PTFE ist noch geringer. Aus hochfrequenztechnischer Sicht würde sich also ein dielektrischer Wellenleiter aus PTFE am besten für ein HF-Messgerät eignen. Leider sind sowohl PTFE als auch PFA Kunststoffe, die Fluor enthalten, was die Herstellung aufwändig und teuer macht. Hingegen ist eine kostengünstige Herstellung eines Wellenleiters mit HDPE z.B. mittels Kunststoffspritzguss möglich. Allerdings hat HDPE den Nachteil, dass es einen relativ geringen Schmelzpunkt (etwa 130 °C) hat. Ein weiterer möglicher Werkstoff im Hochtemperaturbereich der HF-Antennen ist Polyetheretherketon (PEEK). PEEK schmilzt bei etwa 400 °C und kann in Umgebungen von 300 - 325 °C eingesetzt werden, ohne sich zu verformen. Während PTFE für Temperaturen bis zu 250 °C verwendbar ist, kann Druck und/oder eine andere mechanische Belastung auf PTFE bei dieser Temperatur zu einer Verformung führen. Im Fall von PEEK ermöglicht seine Härte den Einsatz in einer Umgebung mit hohen Belastungen und hohen Temperaturen ohne Verlust der Formeigenschaften. Nachteilig an PEEK ist der relativ hohe Verlustwinkel tan(δ), der im Frequenzbereich um 300 GHz zwischen 0,007 und 0,01 liegt. Deshalb kann ein dielektrischer Wellenleiter aus PEEK zur Temperaturentkopplung aus mechanischer Sicht besonders geeignet sein, jedoch ist es sinnvoll, aufgrund der hohen Hochfrequenzverluste eine beschränkte Länge eines zweiten Wellenleiterteilstück aus PEEK zu verwenden. Es sei noch erwähnt, dass Keramik eine noch höhere Temperaturbeständigkeit als Kunststoffe aufweisen kann.

In einigen nicht beanspruchten Ausführungsformen besteht das zweite Wellenleiterteilstück, wenn es als Hohlleiter ausgeführt ist, aus Metall, insbesondere aus Kupfer, Edelstahl, Messing oder Aluminium, oder weist dieses Material auf. Eine Verwendung dieser Materialkombination kann vorteilhafterweise einen anders gelagerten Kompromiss zwischen Signaldämpfung und Temperaturfestigkeit ermöglichen als andere Materialkombinationen.

Ein Aspekt betrifft ein Verfahren zur Herstellung eines Wellenleiters und einer Antenne entsprechend Anspruch 5, mit den Schritten:
bereitstellen eines ersten Wellenleiterteilstücks, welches ein erstes Material aufweist;
bereitstellen eines zweiten Wellenleiterteilstücks, welches ein zweites Material aufweist, wobei das zweite Material eine höhere Temperaturstabilität als das erste Wellenleiterteilstück aufweist; und
verbinden des ersten Wellenleiterteilstücks mit dem zweiten Wellenleiterteilstück mittels einer form-, kraft- und/oder stoffschlüssigen Verbindung, insbesondere einer Klebeverbindung und/oder Ultraschallschweißung.

Da die Kunststoffe des ersten Wellenleiterteilstücks und des zweiten Wellenleiterteilstücks unterschiedliche DK-Werte aufweisen können, können bei einer Stoßverbindung (wie z.B. in **Fig. 4b** dargestellt), unvorteilhafte Reflexionen entstehen. Für diesen Fall können sogenannte "Anpassbereiche" oder "Übergangsbereiche" vorgesehen werden. Diese Bereiche zeichnen sich dadurch aus, dass die Übergänge in einer speziellen Form gestaltet sind und/oder mittels anderer Merkmale - z.B. deren Fügetechnik - eine besonders reflexionsarme Stoßverbindung aufweisen. Beispielsweise können die Übergänge als Keil, als Kegel und/oder als eine andere Abschrägung gestaltet sein. In Experimenten konnte gezeigt werden, dass Abschrägungen mit einem Winkel zwischen etwa 30° und 60°, z.B. von etwa 45°, zur Mittelachse des ersten und/oder zweiten Wellenleiterteilstücks besonders reflexionsarm sein können. Auch hat sich gezeigt, dass eine Schweiß- oder Klebeverbindung zu relativ geringen Reflexionen führen kann.

In einigen Ausführungsformen weisen das erste Wellenleiterteilstück und das zweite Wellenleiterteilstück eine unterschiedliche Querschnittsfläche auf. Beispielsweise kann das zweite Wellenleiterteilstück dicker oder dünner ausgeführt sein als das erste Teilstück. Die Dicke des jeweiligen Wellenleiters kann dabei auf die relative Permittivität des verwendeten Kunststoffs oder der verwendeten Keramik abgestimmt sein, damit eine optimale Ausbreitung der Welle hinsichtlich Dämpfung im Wellenleiter gewährleistet ist. Das Verhältnis von Querschnittsfläche zur relativen Permittivität des Materials bestimmt das Verhältnis der Feldenergien, d.h. wie viel des elektrischen Felds sich innerhalb und außerhalb des Wellenleiters ausbreiten. Je mehr Feld sich innerhalb des Materials fortbewegt, desto höher ist die Signaldämpfung. Je mehr Feld sich außerhalb des Materials ausbreitet, desto empfindlicher ist das Signal gegenüber Störeinflüssen von außen. Hier gilt es also einen optimalen Kompromiss zwischen Querschnittsfläche und verwendetem Material zu finden.

In einer Ausführungsform steckt ein zweistückig ausgeführter Wellenleiter in einem Hohlleiter, der gewissermaßen als ein dritter Wellenleiterabschnitt fungiert.

Ein Aspekt betrifft eine Wellenleiteranordnung. Die Wellenleiteranordnung weist einen dielektrischen Wellenleiter und eine Antenne wie oben und/oder nachfolgend beschrieben auf, und ein Temperaturzwischenstück, welches den Wellenleiter umfasst. Das Temperaturzwischenstück kann vorteilhafterweise dazu beitragen, dass die Wellenleiteranordnung und/oder das Messgerät eine besonders hohe Temperaturfestigkeit aufweist.

In einigen Ausführungsformen weist das Temperaturzwischenstück an einer Außenseite Kühlrippen auf. Dies kann zu einer weiteren Erhöhung der Temperaturfestigkeit und/oder zu einer besonders kompakten Bauweise der Wellenleiteranordnung und/oder des Messgeräts beitragen.

Ein Aspekt betrifft ein Radargerät, insbesondere ein Radarfüllstandmessgerät, mit einem Wellenleiter und einer Antenne oder einer Wellenleiteranordnung wie oben und/oder nachfolgend beschrieben.

Ein Aspekt betrifft eine Verwendung eines Wellenleiters oder einer Wellenleiteranordnung wie oben und/oder nachfolgend beschrieben zur Propagierung von Radarwellen, insbesondere für Frequenzen zwischen 70 GHz und 500 GHz, beispielsweise zwischen 100 GHz und 300 GHz. Beispielsweise können bei Frequenzen in einem Bereich von etwa 100 GHz bis 300 GHz die Antennen der Messgeräte noch kleiner ausgeführt werden, um vergleichbare Antennengewinne wie bei 80 GHz zu erhalten. Mit kleineren Antennen lassen sich darüber hinaus neue Anwendungsfelder in kleineren Behältern oder in der Fabrikautomation. Dabei ist die Halbleitertechnologie für solche Frequenzbereiche am Markt frei kommerziell verfügbar.

Ein Aspekt betrifft eine Verwendung eines Wellenleiters und einer Antenne oder einer Wellenleiteranordnung entsprechend Anspruch 12 wie oben und/oder nachfolgend beschrieben für Temperaturen zwischen -200 °C und 450 °C, insbesondere für Temperaturen zwischen -100 °C und 330 °C. Damit können vorteilhafterweise Prozesseigenschaften selbst bei hohen Prozesstemperaturen gemessen werden, auch wenn die Elektronik eines Messgeräts häufig nur bis 85°C spezifiziert ist. Eine Temperaturentkopplung zwischen einem HF-Generator und einer Antenne findet dann über die Gestaltung des Wellenleiters oder der Wellenleiteranordnung statt.

Ein Aspekt betrifft eine Verwendung eines Radargeräts entsprechend Anspruch 11 wie oben und/oder nachfolgend beschrieben zur Füllstandmessung, zur Topologiebestimmung und/oder zur Grenzstandbestimmung.

Es sei noch angemerkt, dass die verschiedenen oben und/oder nachfolgend beschriebenen Ausführungsformen miteinander kombiniert werden können.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

### Kurze Beschreibung der Figuren

Dabei zeigt:
**Fig. 1** schematisch ein HF-Messgerät gemäß einer Ausführungsform, das an einem Behälter angeordnet ist;
**Fig. 2** schematisch ein HF-Messgerät gemäß einer Ausführungsform;
**Fig. 3a** - **3d** schematisch Wellenleiter gemäß einer Ausführungsform.

### Detaillierte Beschreibung von Ausführungsformen

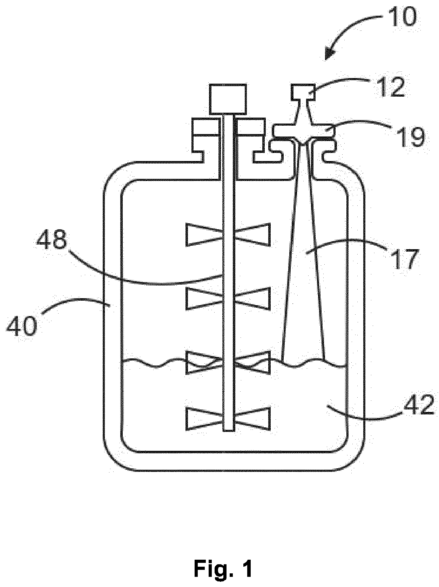

**Fig. 1** zeigt schematisch ein HF-Messgerät 10 gemäß einer Ausführungsform, das an einem Behälter 40 angeordnet ist. Der schematisch dargestellte Behälter 40 kann beispielsweise als ein Gefäß oder ein Messtank, Prozesstank, Lagertank oder ein Silo von beliebiger Form ausgeführt sein. Der Behälter 40 kann zumindest teilweise mit einem Füllgut 42 gefüllt sein. Das Füllgut kann beispielsweise eine Flüssigkeit sein, einschließlich einer Emulsion oder Suspension, oder ein Schüttgut, insbesondere ein granuliertes oder pulverförmiges Schüttgut, und/oder eine andere Art von Medium oder Produkt.

Das gezeigte HF-Messgerät 10, das für Frequenzen über 80 GHz eingerichtet ist, ermöglicht z.B. die Verwendung von kleineren Antennenbauformen und/oder einen größeren Antennengewinn bei gleicher Apertur als ältere Geräte, die Frequenzen von etwa 6 GHz verwenden. Vorteilhafterweise können damit recht geringe Öffnungswinkel der Hauptkeulen 17 erzielt werden, so dass die Antennenrichtdiagramme so klein sein können, dass Störreflektorenwie z.B. Rührwerke 48 - selbst in schlanken, hohen Behältern 40 nicht mehr in den "Sichtbereich" der Antenne 19 fallen. Als Antenne 19 können beispielsweise runde Hornantennen verwendet werden, die z.B. in einigen Ausführungsformen eine dielektrische Füllung aufweisen können, um die Länge des Antennenhorns zu reduzieren.

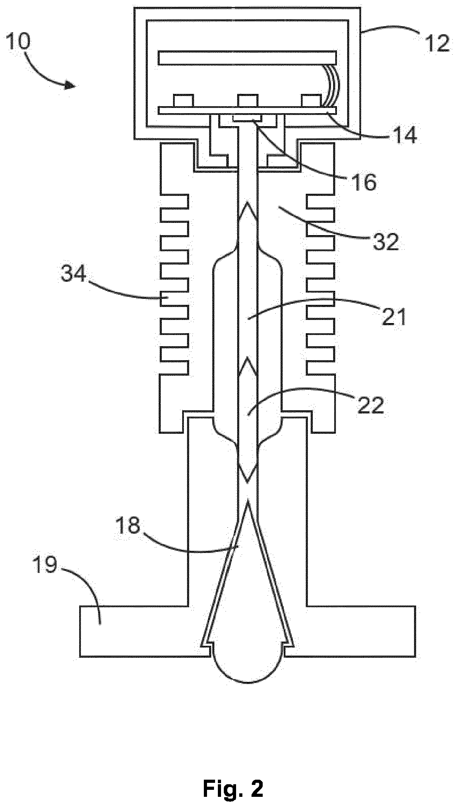

**Fig. 2** zeigt schematisch ein HF-Messgerät 10, z.B. ein Radarmessgerät, gemäß einer Ausführungsform. Das HF-Messgerät 10 weist ein Gehäuse 12 auf, in dem eine Sensorelektronik und ein Radarmodul 16 z.B. ein RSoC, Radar System on Chip angeordnet sind. Das Radarmodul 16 ist mit einer Antenne 19 über einen Wellenleiter verbunden, der aus einem ersten Wellenleiterteilstück 21 und einem zweiten Wellenleiterteilstück 22 besteht. Der Wellenleiter kann in einer Ausführungsform auch aus mehr als zwei Teilstücken bestehen. Die Antenne 19 ist als eine Hornantenne 18 ausgeführt und weist eine Füllung 18 aus einem dielektrischen Material auf. Die Antenne 19 ist zur Prozessseite orientiert, wobei der Prozess hohe Temperaturen aufweisen kann. Für eine hohe Temperaturfestigkeit des HF-Messgeräts 10 weist das Material des zweiten Wellenleiterteilstücks 22 eine höhere Temperaturstabilität, Temperaturbeständigkeit oder Temperaturfestigkeit auf als das erste Wellenleiterteilstück 21.

Zwischen dem zweiten Wellenleiterteilstück 22 und der Antenne 19 ist noch ein Hohlleiter angeordnet.

Für eine weitere Erhöhung der Temperaturfestigkeit weist das HF-Messgerät 10 ein Temperaturzwischenstück 32 auf, welches den Wellenleiter umfasst. Das Temperaturzwischenstück 32 kann einen inneren Hohlraum aufweisen. Weiterhin kann das Temperaturzwischenstück 32 an einer Außenseite Kühlrippen 34 aufweisen.

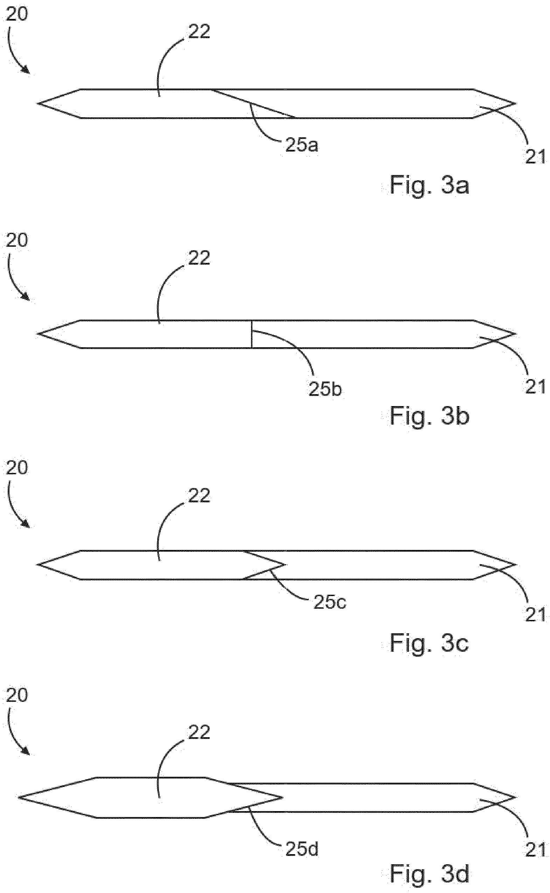

**Fig. 3a - 3d** zeigen schematisch Wellenleiter 20 gemäß einer Ausführungsform. Der Wellenleiter 20 weist ein erstes Wellenleiterteilstück 21 und ein zweites Wellenleiterteilstück 22 auf.

Da die Kunststoffe des ersten Wellenleiterteilstücks und des zweiten Wellenleiterteilstücks unterschiedliche DK-Werte aufweisen können, können bei einer Stoßverbindung (wie z.B. in **Fig. 3b** dargestellt), unvorteilhafte Reflexionen entstehen. Die **Fig. 3a** - **3d** zeigen verschiedene Ausführungen für sogenannte "Anpassbereiche" oder "Übergangsbereiche" 25a - 25d. Dabei ist der Anpassbereich 25a der **Fig. 3a** als Keil ausgeführt. Der Anpassbereich 25c der **Fig. 3c** bzw. der Anpassbereich 25d der **Fig. 3d** ist als Kegel ausgeführt. Der Anpassbereich kann auch als eine andere Abschrägung gestaltet sein. In Experimenten konnte gezeigt werden, dass Abschrägungen mit einem Winkel zwischen etwa 30° und 60°, z.B. von etwa 45°, zur Mittelachse des ersten und/oder zweiten Wellenleiterteilstücks besonders reflexionsarm sein können. Auch hat sich gezeigt, dass eine Schweiß- oder Klebeverbindung zu relativ geringen Reflexionen führen kann.

### Liste der Bezugszeichen

- 10: Radargerät
- 12: Gehäuse
- 14: Sensorelektronik
- 16: Radarmodul
- 17: Hauptkeulen
- 18: Antenne, Hornantenne
- 19: Antennensystem
- 20: dielektrischer Wellenleiter
- 21: erstes Wellenleiterteilstück
- 22: zweites Wellenleiterteilstück
- 25a - 25d: Anpassbereich
- 30: Wellenleiteranordnung
- 32: Temperaturzwischenstück
- 34: Kühlrippen
- 40: Behälter
- 42: Füllgut
- 48: Rührwerk

## Patentansprüche

1. Wellenleiter (20) und Antenne (19), der Wellenleiter (20) eingerichtet zum Propagieren von Hochfrequenzwellen zwischen einem Radarmodul (16) und der Antenne (19), wobei die Antenne (19) zu einer Seite eines Prozesses orientiert ist, der Wellenleiter (20) aufweisend:
ein erstes Wellenleiterteilstück (21), welches ein erstes Material aufweist, und
ein zweites Wellenleiterteilstück (22), das dem Prozess zugewandt ist und welches ein zweites Material aufweist und über einen zwischen der Antenne (19) und dem zweiten Wellenleiterteilstück (22) angeordneten Hohlleiter mit der Antenne (19) verbunden ist, wobei das zweite Material eine höhere Temperaturstabilität als das erste Wellenleiterteilstück (21) aufweist,
wobei das erste Wellenleiterteilstück (21) und das zweite Wellenleiterteilstück (22) als dielektrischer Wellenleiter ausgeführt sind.

2. Wellenleiter (20) und Antenne (19) nach Anspruch 1, wobei das erste Wellenleiterteilstück (21) eine geringere Dämpfung aufweist als das zweite Wellenleiterteilstück (22).

3. Wellenleiter (20) und Antenne (19) nach einem der vorhergehenden Ansprüche,
wobei das erste Wellenleiterteilstück (21) aus einem Kunststoff besteht oder dieses Material aufweist, insbesondere ein Material aus einer Gruppe, welche Polytetrafluorethylen, PTFE, Perfluoralkoxy, PFA, Polyvinylidenfluorid, PVDF, Polypropylen, PP, Polyoxymethylen, POM, Polyethylenterephthalat, PET, Polybutylenterephthalat, PBT, Hart-Polyethylen, HDPE, umfasst.

4. Wellenleiter (20) und Antenne (19) nach einem der vorhergehenden Ansprüche,
wobei das zweite Wellenleiterteilstück (22) aus einer Keramik oder aus einem Kunststoff besteht oder dieses Material aufweist, insbesondere ein Material aus einer Gruppe, welche Polyetheretherketon, PEEK, Polyetherketone, PEK, Polytetrafluorethylen, PTFE, Perfluoralkoxy, PFA, und/oder Polyvinylidenfluorid, PVDF, umfasst.

5. Verfahren zur Herstellung eines Wellenleiters (20) und einer Antenne (19) nach einem der vorhergehenden Ansprüche, mit den Schritten:
bereitstellen eines ersten Wellenleiterteilstücks (21), welches ein erstes Material aufweist;
bereitstellen eines zweiten Wellenleiterteilstücks (22), welches ein zweites Material aufweist und über einen zwischen der Antenne (19) und dem zweiten Wellenleiterteilstück (22) angeordneten Hohlleiter mit der Antenne (19) verbunden ist, wobei das zweite Material eine höhere Temperaturstabilität als das erste Wellenleiterteilstück (21) aufweist und dazu eingerichtet ist, dem Prozess zugewandt verwendet zu werden,
wobei das erste Wellenleiterteilstück (21) und das zweite Wellenleiterteilstück (22) als dielektrischer Wellenleiter ausgeführt sind; und
verbinden des ersten Wellenleiterteilstücks (21) mit dem zweiten Wellenleiterteilstück (22) mittels einer form-, kraft- und/oder stoffschlüssigen Verbindung, insbesondere einer Klebeverbindung und/oder Ultraschallschweißung.

6. Verfahren nach Anspruch 5,
wobei zwischen dem ersten Wellenleiterteilstück (21) und dem zweiten Wellenleiterteilstück (22) ein Anpassbereich (25a, 25b, 25c, 25d) angeordnet ist, und/oder
wobei der Anpassbereich (25a, 25c, 25d) als Keil oder als Kegel ausgeführt ist.

7. Verfahren nach Anspruch 5 oder 6,
wobei das erste Wellenleiterteilstück (21) und das zweite Wellenleiterteilstück (22) eine unterschiedliche Querschnittsfläche aufweisen.

8. Wellenleiteranordnung, aufweisend:
einen dielektrischen Wellenleiter (20) und eine Antenne (19) nach einem der Ansprüche 1 bis 4, und
ein Temperaturzwischenstück (32), welches den Wellenleiter (20) umfasst.

9. Wellenleiteranordnung nach Anspruch 8, wobei das Temperaturzwischenstück (32) an einer Außenseite Kühlrippen (34) aufweist.

10. Radargerät (10), insbesondere Radarfüllstandmessgerät, mit einem Wellenleiter (20) und einer Antenne (19) nach einem der Ansprüche 1 bis 4 oder einer Wellenleiteranordnung nach Anspruch 8 oder 9.

11. Verwendung eines Radargeräts (10) nach Anspruch 10 zur Füllstandmessung, zur Topologiebestimmung und/oder zur Grenzstandbestimmung.

12. Verwendung eines Wellenleiters (20) und einer Antenne (19) nach einem der Ansprüche 1 bis 4 oder einer Wellenleiteranordnung nach Anspruch 8 oder 9 zur Propagierung von Radarwellen, insbesondere für Frequenzen zwischen 70 GHz und 500 GHz, insbesondere zwischen 100 GHz und 300 GHz, und/oder
Verwendung eines Wellenleiters (20) und einer Antenne (19) nach einem der Ansprüche 1 bis 4 oder einer Wellenleiteranordnung nach Anspruch 8 oder 9 für Temperaturen zwischen 0 °C und 450 °C, insbesondere für Temperaturen zwischen 100 °C und 330 °C.

## Claims

1. A waveguide (20) and an antenna (19), the waveguide (20) being configured to propagate high-frequency waves between a radar module (16) and the antenna (19), the antenna (19) being oriented towards a side of a process, the waveguide (20) comprising:
a first waveguide section (21) comprising a first material, and
a second waveguide section (22) facing the process and comprising a second material, which is connected to the antenna (19) via a hollow conductor arranged between the antenna (19) and the second waveguide section (22), wherein the second material has a higher temperature stability than the first waveguide section (21),
wherein the first waveguide section (21) and the second waveguide section (22) are designed as dielectric waveguides.

2. A waveguide (20) and an antenna (19) according to claim 1,
wherein the first waveguide section (21) has a lower attenuation than the second waveguide section (22).

3. A waveguide (20) and an antenna (19) according to one of the preceding claims,
wherein the first waveguide section (21) consists of or comprises a plastic material, in particular a material from a group comprising polytetrafluoroethylene, PTFE, perfluoroalkoxy, PFA, polyvinylidene fluoride, PVDF, polypropylene, PP, polyoxymethylene, POM, polyethylene terephthalate, PET, polybutylene terephthalate, PBT, and high-density polyethylene, HDPE.

4. A waveguide (20) and an antenna (19) according to one of the preceding claims,
wherein the second waveguide section (22) consists of or comprises a ceramic or a plastic, in particular a material from a group comprising polyether ether ketone, PEEK, polyether ketones, PEK, polytetrafluoroethylene, PTFE, perfluoroalkoxy, PFA, and/or polyvinylidene fluoride, PVDF.

5. A method for manufacturing a waveguide (20) and an antenna (19) according to one of the preceding claims, comprising the steps of:
providing a first waveguide section (21) comprising a first material;
providing a second waveguide section (22) comprising a second material and being connected to the antenna (19) via a hollow waveguide arranged between the antenna (19) and the second waveguide section (22), wherein the second material has a higher temperature stability than the first waveguide section (21) and is configured to be used facing the process,
wherein the first waveguide section (21) and the second waveguide section (22) are designed as dielectric waveguides; and
connecting the first waveguide section (21) to the second waveguide section (22) by means of a form-fit, force-fit and/or material-fit connection, in particular by an adhesive connection and/or by ultrasonic welding.

6. The method according to claim 5,
wherein an adjustment region (25a, 25b, 25c, 25d) is arranged between the first waveguide section (21) and the second waveguide section (22), and/or
wherein the matching region (25a, 25c, 25d) is designed as a wedge or as a cone.

7. The method according to claim 5 or 6,
wherein the first waveguide section (21) and the second waveguide section (22) have different cross-sectional areas.

8. A waveguide arrangement, comprising:
a dielectric waveguide (20) and an antenna (19) according to one of claims 1 to 4, and
a temperature adapter (32) which comprises the waveguide (20).

9. The waveguide assembly according to claim 8,
wherein the temperature adapter (32) has cooling fins (34) on an outer side.

10. A radar device (10), in particular a radar level measuring device, with a waveguide (20) and an antenna (19) according to one of claims 1 to 4 or
a waveguide arrangement according to claim 8 or 9.

11. Use of a radar device (10) according to claim 10 for level measurement, topology determination and/or limit level determination.

12. Use of a waveguide (20) and an antenna (19) according to one of claims 1 to 4 or a waveguide arrangement according to claim 8 or 9 for propagating radar waves, in particular for frequencies between 70 GHz and 500 GHz, in particular between 100 GHz and 300 GHz, and/or
Use of a waveguide (20) according to one of claims 1 to 4 or a waveguide arrangement according to claim 8 or 9 for temperatures between 0 °C and 450 °C, in particular for temperatures between 100 °C and 330 °C.

## Revendications

1. Guide d'ondes (20) et antenne (19), le guide d'ondes (20) étant configuré pour propager des ondes à haute fréquence entre un module radar (16) et l'antenne (19), l'antenne (19) étant orientée vers un côté d'un processus, le guide d'ondes (20) comportant :
une première portion partielle de guide d'ondes (21) qui comporte un premier matériau, et
une seconde portion partielle de guide d'ondes (22) qui est dirigée vers le processus et qui comporte un second matériau et est reliée à l'antenne (19) par l'intermédiaire d'un conducteur creux disposé entre l'antenne (19) et la seconde portion partielle de guide d'ondes (22), le second matériau ayant une stabilité thermique supérieure à la première portion partielle de guide d'ondes (21),
la première portion partielle de guide d'ondes (21) et la seconde portion partielle de guide d'ondes (22) étant réalisées sous la forme d'un guide d'ondes diélectrique.

2. Guide d'ondes (20) et antenne (19) selon la revendication 1,
la première portion partielle de guide d'ondes (21) ayant une atténuation inférieure à la seconde portion partielle de guide d'ondes (22).

3. Guide d'ondes (20) et antenne (19) selon l'une des revendications précédentes,
la première portion partielle de guide d'ondes (21) étant constituée d'une matière plastique ou comportant ce matériau, en particulier un matériau d'un groupe qui comprend un polytétrafluoroéthylène, PTFE, un perfluoroalcoxy, PFA, un polyfluorure de vinylidène, PVDF, un polypropylène, PP, un polyoxyméthylène, POM, un poly(éthylène téréphtalate), PET, un poly(butylène téréphtalate), PBT, un polyéthylène dur, HDPE.

4. Guide d'ondes (20) et antenne (19) selon l'une des revendications précédentes,
la seconde portion partielle de guide d'ondes (22) étant constituée d'une céramique ou d'une matière plastique ou comportant ce matériau, en particulier un matériau d'un groupe qui comprend un polyéthercétone, PEEK, un polyéthercétone, PEK, un polytétrafluoroéthylène, PTFE, un perfluoralcoxy, PFA, et/ou un polyfluorure de vinylidène, PVDF.

5. Procédé de fabrication d'un guide d'ondes (20) et d'une antenne (19) selon l'une des revendications précédentes, comportant les étapes consistant à :
fournir une première portion partielle de guide d'ondes (21) qui comporte un premier matériau ;
fournir une seconde portion partielle de guide d'ondes (22) qui comporte un second matériau et est reliée à l'antenne (19) par l'intermédiaire d'un conducteur creux disposé entre l'antenne (19) et la seconde portion partielle de guide d'ondes (22), le second matériau ayant une stabilité thermique supérieure à la première portion partielle de guide d'ondes (21) et étant configuré pour être utilisé en étant dirigé vers le processus, la première portion partielle de guide d'ondes (21) et la seconde portion partielle de guide d'ondes (22) étant réalisées sous la forme d'un guide d'ondes diélectrique ; et
assembler la première portion partielle de guide d'ondes (21) avec la seconde portion partielle de guide d'ondes (22) au moyen d'une liaison par complémentarité de formes, de manière forcée et/ou par liaison de matière, en particulier une liaison adhésive et/ou un soudage par ultrasons.

6. Procédé selon la revendication 5,
dans lequel une zone de conformation (25a, 25b, 25c, 25d) est disposée entre la première portion partielle de guide d'ondes (25) et la seconde portion partielle de guide d'ondes (22), et/ou
dans lequel la zone de conformation (25a, 25c, 25d) est conçue comme un coin ou un cône.

7. Procédé selon la revendication 5 ou 6,
dans lequel la première portion partielle de guide d'ondes (21) et la seconde portion partielle de guide d'ondes (22) ont une aire de section transversale différente.

8. Ensemble de guide d'ondes, comportant :
un guide d'ondes diélectrique (20) et une antenne (19) selon l'une des revendications 1 à 4, et
une pièce de température intermédiaire (32) qui comprend le guide d'ondes (20).

9. Ensemble de guide d'ondes selon la revendication 8,
dans lequel la pièce de température intermédiaire (32) comporte des nervures de refroidissement (34) sur un côté extérieur.

10. Appareil radar (10), en particulier appareil radar de mesure de niveau de remplissage, comportant un guide d'ondes (20) et une antenne (19) selon l'une quelconque des revendications 1 à 4 ou un ensemble de guide d'ondes selon la revendication 8 ou 9.

11. Utilisation d'un appareil radar (10) selon la revendication 10 pour mesurer un niveau de remplissage, pour déterminer une topologie et/ou pour déterminer un niveau limite.

12. Utilisation d'un guide d'ondes (20) et d'une antenne (19) selon l'une des revendications 1 à 4 ou d'un ensemble de guide d'ondes selon la revendication 8 ou 9 pour la propagation d'ondes radar, en particulier pour des fréquences comprises entre 70 GHz et 500 GHz, en particulier entre 100 GHz et 300 GHz, et/ou
utilisation d'un guide d'ondes (20) et d'une antenne (19) selon l'une des revendications 1 à 4 ou d'un ensemble de guide d'ondes selon la revendication 8 ou 9 pour des températures comprises entre 0 °C et 450 °C, en particulier pour des températures comprises entre 100 °C et 330 °C.
